Europäisches Patentamt

European Patent Office

Office européen des brevets

(19)

(11) **EP 1 224 675 B1**

(12) **EUROPÄISCHE PATENTSCHRIFT**

(45) Veröffentlichungstag und Bekanntmachung des Hinweises auf die Patenterteilung:
**26.05.2004 Patentblatt 2004/22**

(21) Anmeldenummer: **00988793.6**

(22) Anmeldetag: **13.12.2000**

(51) Int Cl.⁷: **H01G 5/16**

(86) Internationale Anmeldenummer:
**PCT/EP2000/012671**

(87) Internationale Veröffentlichungsnummer:
**WO 2001/045119 (21.06.2001 Gazette 2001/25)**

(54) **DURCHSTIMMBARER HOCHFREQUENZ-KONDENSATOR**

TUNABLE HIGH-FREQUENCY CAPACITOR

CONDENSATEUR A HAUTE FREQUENCE VARIABLE

(84) Benannte Vertragsstaaten:
**AT BE CH CY DE DK ES FI FR GB GR IE IT LI LU MC NL PT SE TR**

(30) Priorität: **15.12.1999 EP 99125453**
    **05.09.2000 DE 10043758**

(43) Veröffentlichungstag der Anmeldung:
**24.07.2002 Patentblatt 2002/30**

(73) Patentinhaber:
• **Fraunhofer-Gesellschaft zur Förderung der angewandten Forschung e.V.**
  **80686 München (DE)**
• **Siemens Aktiengesellschaft**
  **80506 München (DE)**

(72) Erfinder:
• **TUO, Xihe**
  **47057 Duisburg (DE)**
• **WAGNER, Bernd**
  **25582 Looft (DE)**
• **QUENZER, Hans, Joachim**
  **25524 Itzehoe (DE)**

(74) Vertreter: **Schoppe, Fritz, Dipl.-Ing.**
  **Patentanwälte Schoppe, Zimmermann, Stöckeler & Zinkler,**
  **Postfach 246**
  **82043 Pullach bei München (DE)**

(56) Entgegenhaltungen:
**EP-A- 0 725 408**

**Beschreibung**

Die vorliegende Erfindung bezieht sich auf einen durchstimmbaren Kondensator, und insbesondere auf einen stufenlos durchstimmbaren mikromechanischen Hochfrequenz-Kondensator.

Aus EP 0 725 408 A ist ein durchstimmbarer Kondensator bekannt, bei dem, abhängig von einem an einer Monitor-Elektrode und an einer beweglichen Elektrode anlegbaren Steuerungssignal, eine Verschiebung der beweglichen Elektrode bezüglich einer nicht-beweglichen Elektrode bewirkt wird.

Durchstimmbare Kondensatoren mit hoher Güte Q werden beispielsweise in durchstimmbaren Oszillatoren, sogenannten VCOs = Voltage-Control-Oscillators = spannungsgesteuerte Oszillatoren, bei Hochfrequenz- und Mikrowellenschaltungen benötigt. Kapazitätsdioden, die auch als Varaktordioden bezeichnet werden, haben dabei die Aufgabe, die Kapazität zu verändern. Durch Anlegen einer Sperrspannung ändert sich die Raumladungsverteilung in der Sperrschicht dieser Dioden und damit deren Kapazität. Dabei nimmt mit zunehmender Sperrspannung die Kapazität ab. Typischerweise wird eine Kapazitätsveränderung von 10 pF auf 2 pF bei einer Änderung der Sperrspannung von 1 V auf 10 V erreicht. Diese Dioden haben jedoch Nachteile, die sich insbesondere bei Mikrowellen-Oszillatoren bemerkbar machen. So führt beispielsweise der hohe Serienwiderstand zu geringen Schwinggüten Q, und bei höheren Frequenzen nimmt das Rauschen zu. Ein weiterer Nachteil besteht darin, daß der Kapazitätsbereich der Dioden nach unten auf etwa 2 pF begrenzt ist.

Im Hochfrequenz- oder Mikrowellen-Bereich und beim Entwurf von entsprechenden Komponenten ist es ferner stets wünschenswert, einstellbare oder abstimmbare Komponenten, wie z. B. einstellbare Kondensatoren, einstellbare Widerstände oder einstellbare induktive Bauelemente zur Verfügung zu haben. Solche Komponenten geben einem Entwickler im Hochfrequenz- und Mikrowellen-Bereich eine hohe Flexibilität hinsichtlich des Entwurfs von Hochfrequenz- und Mikrowellenschaltungen an die Hand. Bei zukünftigen re-konfigurierbaren Funksystemen, wie z. B. softwarebasierten Funksystemen, werden diese Komponenten als Enabling-Komponenten/Technologie (Freigabe-Komponenten/Technologie) bezeichnet. Dies rührt daher, da softwarebasierte Funksysteme ein programmierbares Hochfrequenz-Empfangsteil (HF-Empfangsteil) benötigen, das neben anderen Anforderungen an die Hochfrequenz-Komponenten zumindest unterschiedliche Frequenzbänder unterstützt. Dies stellt bei der herkömmlichen Komponententechnologie, insbesondere dann, wenn man Mobilfunkanwendungen in Betracht zieht, eine große Herausforderung dar, da der Leistungsverbrauch, der Platzbedarf, das Gewicht sowie das elektrische Verhalten sehr anspruchsvolle Herausforderungen darstellen.

Die oben beschriebene und gut bekannte Varaktordiode ist z. B. eine Art eines einstellbaren Kondensators. Ein weiterer Nachteil, zusätzlich zu den oben genannten Nachteilen, besteht darin, daß die Kapazität der Varaktordiode sich jedoch nicht-linear mit der angelegten Steuerspannung ändert, und daß der Q-Faktor einer solchen Varaktordiode allgemein sehr niedrig ist, und bei etwa 40 liegt. Diese Merkmale beschränken das Einsatzgebiet der Varaktordiode auf Anwendungen, bei denen die Anforderungen bezüglich der Linearität und des Q-Faktors (der Güte) nicht hoch sind. Typische Beispiele für den Einsatz von Varaktordioden sind die oben genannten spannungsgesteuerten Oszillatoren (VCOs) sowie einige abstimmbare Filter.

In Anbetracht dieser Nachteile wurden in letzter Zeit weltweit vielfache Forschungsaktivitäten entwickelt, um Lösungen für die oben genannten, einstellbaren Komponenten zu finden.

Einige Konzepte für einstellbare Kondensatoren wurden vorgeschlagen. Diese Konzepte basieren auf der sogenannten MEMS-Technologie, wobei MEMS für "Micro-Electro-Mechanical Systems" steht. Bei der MEMS-Technologie handelt es sich um eine aufstrebende Technologie, die in den letzten Jahren mehr und mehr Aufmerksamkeit gewonnen hat. Der einstellbare MEMS-Kondensator kann als Gegenstück zu der Halbleiter-Varaktor-Diode gesehen werden.

Für den Einsatz in programmierbaren Hochfrequenz-Schaltungen bestehen eine Vielzahl von Anforderungen an einen MEMS-Kondensator. Idealerweise sollte ein MEMS-Kondensator zunächst ein lineares Bauelement sein. Dies bedeutet, daß sich die Kapazität des MEMS-Kondensators mit dem Hochfrequenz-Signal nicht ändert, wenn eine feste Steuerungsspannung oder ein fester Steuerungsstrom angelegt ist. Zweitens sollte der MEMS-Kondensator einen hohen Q-Faktor (hohe Güte) haben, also niedrige Verluste. Drittens sollte ein MEMS-Kondensator einen großen Abstimmbereich aufweisen. Der typischerweise erforderliche Abstimmbereich für Mobiltelephone ist von 0,5 pF bis 20 pF. Ferner sollte der MEMS-Kondensator keine Leistung verbrauchen und einfach mit anderen Schaltungen und Schaltungsteilen integrierbar sein.

Derzeitig ist kein MEMS-Kondensator bekannt, der von irgendeinem Hersteller erhältlich wäre. Es existieren jedoch einige Konzepte, wie beispielsweise der in dem Aufsatz von T. T. C. Nguyen, "Micromachining Technologies for Miniaturized Communication Devices", Proc. SPIE Conference on Micromachined Devices and Components IV, SPIE Band 3514, September 1998, S. 24-37 beschriebene Ansatz. In diesem Aufsatz wird eine elektrostatisch betätigte, kontinuierlich veränderbare Kapazität beschrieben, bei der eine bewegliche Elektrode aus einer metallischen Membran besteht, die an Federbalken aufgehängt ist.

Allgemein gesprochen besteht ein MEMS-Kondensator grundsätzlich aus zwei Metallplatten, deren Entfernung und/oder Bereich (Überlappungsbereich) durch Stellglieder (Aktoren) gesteuert wird. Diese Stellglieder/Aktoren werden durch eine Spannung bei elektrostatischen Aktoren oder durch einen Strom bei thermischen Aktoren gesteuert.

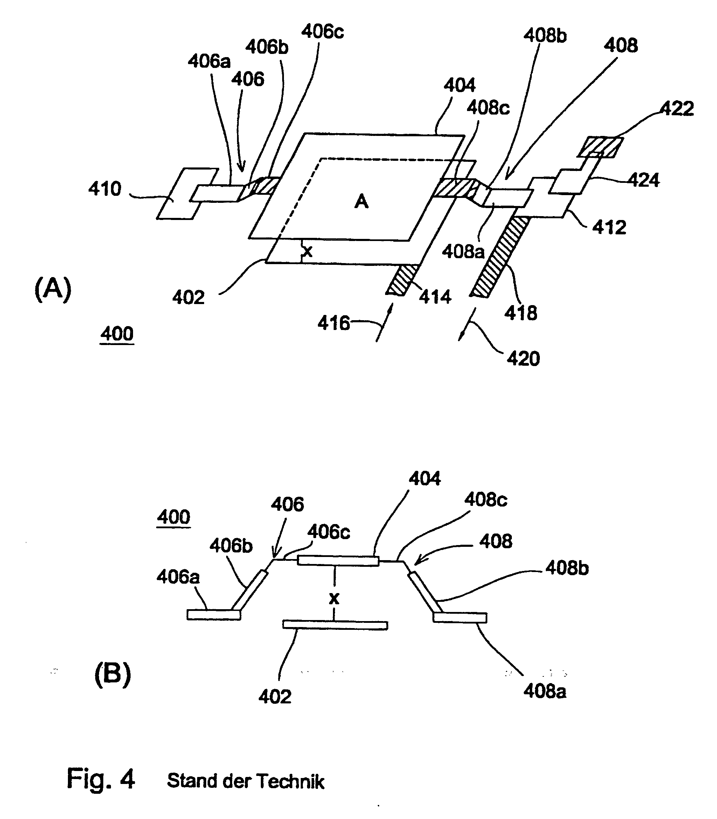

Anhand der Fig. 4 wird ein Beispiel eines aus dem Stand der Technik bekannten MEMS-Kondensator näher beschrieben. Fig. 4A zeigt eine Draufsichtdarstellung eines bekannten MEMS-Kondensators und Fig. 4B zeigt eine Querschnittdarstellung des in Fig. 4A gezeigten Kondensators.

Der MEMS-Kondensator 400 ist durch eine nicht bewegliche Elektrode 402 und eine bewegliche Elektrode 404 gebildet, wobei die beiden Elektroden 402 und 404 im wesentlichen die gleiche Fläche A haben. Die bewegliche Elektrode 404 ist derart angeordnet, daß diese die nicht bewegliche Elektrode 402 im wesentlichen überlappt. Die nicht bewegliche Elektrode 402 und die bewegliche Elektrode 404 sind um eine Entfernung x voneinander beabstandet. Die bewegliche Elektrode 404 ist durch eine erste Aufhängung 406 und eine zweite Aufhängung 408 getragen, wobei die Aufhängungen 406 und 408 ausgebildet sind, um die bewegliche Elektrode 404 derart zu bewegen, daß sich der Abstand x zwischen den Elektroden 402 und 404 ändert.

Die erste Aufhängung 406 ist an einem ersten Befestigungselement 410 befestigt, und die zweite Aufhängung 408 ist an einem zweiten Befestigungselement 412 befestigt. Diese Elemente 410, 412 sind ihrerseits an - nicht dargestellten - Flächen, wie z. B. auf einem Substrat oder ähnlichem, befestigt. Die erste Aufhängung 406 umfaßt einen ersten Abschnitt 406a, einen zweiten Abschnitt 406b und einen dritten Abschnitt 406c. Der zweite Abschnitt 406b umfaßt ein Betätigungsglied/einen Aktor, der zwischen dem ersten Abschnitt 406a und dem dritten Abschnitt 406c geschaltet ist. Der erste Abschnitt 406a ist ferner mit dem ersten Befestigungselement 410 verbunden, und der dritte Abschnitt 406c ist mit der beweglichen Elektrode 404 verbunden. Auf ähnliche Weise umfaßt die zweite Aufhängung 408 einen ersten Abschnitt 408a, einen zweiten Abschnitt 408b sowie einen dritten Abschnitt 408c, wobei der Abschnitt 408b ebenfalls ein Betätigungsglied/ einen Aktor umfaßt. Der erste Abschnitt 408a ist ferner mit dem zweiten Befestigungselement 412 verbunden, und der dritte Abschnitt 408c ist ferner mit der beweglichen Elektrode 404 verbunden. Wie aus 4A zu erkennen ist, sind die Abschnitte 406b und 408b geneigt angeordnet, so daß die Elektrode 404 beabstandet von der Elektrode 402 angeordnet ist.

Die Elektrode 402 umfaßt einen Hochfrequenz-Eingangsanschluß 414, wie durch den Pfeil 416 verdeutlicht ist. Das zweite Befestigungselement 412 umfaßt einen Hochfrequenz-Ausgangsanschluß 418, wie durch den Pfeil 420 verdeutlicht ist. Der Weg eines Hochfrequenzsignals durch den Kondensator 400 erstreckt sich somit vom Anschluß 414 über die Elektrode 402 zur Elektrode 404 zum Ausgang 418. Bezüglich der Aufhängungen 406 und 408 ist anzumerken, daß diese für den Hochfrequenz-Signalweg nicht isoliert sind.

Zur Ansteuerung der Aktoren 406b und 408b ist ein Steuerungsanschluß 422 vorgesehen, der über eine Leitung 424 mit dem zweiten Befestigungselement 412 verbunden ist. Bei Anlegen eines entsprechenden Steuerungssignals an den Anschluß 422 wird eine Betätigung der Aktoren 406b und 408 hervorgerufen, wodurch eine Verschiebung der beweglichen Elektrode 404 hervorgerufen wird, so daß sich der Abstand x zwischen der beweglichen Elektrode 404 und der nicht-beweglichen Elektrode 402 verändert.

Die Kapazität C des Kondensators 400 berechnet sich zu

$$C = \varepsilon_r \cdot \varepsilon_0 \cdot \frac{A}{x}$$

mit:

    $\varepsilon_r$ = Dielektrizitätszahl für das zwischen den Platten angeordnete Dielektrikum,
    $\varepsilon_0$ = elektrische Feldkonstante
    A = Fläche der Kondensatorenplatten,
    x = Abstand der Kondensatorenplatten

In Fig. 4B ist eine Querschnittdarstellung des in Fig. 4A gezeigten Kondensators dargestellt, und für die entsprechenden Elemente sind die gleichen Bezugszeichen verwendet.

Aufgrund der Verwendung der zwei Elektrodenplatten 402 und 404 ist es notwendig, einen Teil der Aufhängungen 406, 408 und insbesondere der Betätigungsglieder 406b und 408b als Teil des Hochfrequenz-Signalweges zu verwenden. Die Kapazität des MEMS-Kondensators 400 ist durch Einstellen der angelegten Spannung oder des angelegten Stroms am Anschluß 422 steuerbar (abstimmbar oder einstellbar). Als Trägersubstrat (in Fig. 4 nicht gezeigt) können unterschiedliche Materialien verwendet werden, wie z. B. ein Silizium-, ein GaAs-(Galliumarsenid), ein Keramik-Substrat oder ähnliches.

Die in Fig. 4 gezeigte Art eines MEMS-Kondensators hat jedoch ähnliche Nachteile wie eine Varaktordiode. Aufgrund der Tatsache, daß sich die Entfernung x und/oder die Fläche A zwischen den zwei Elektrodenplatten 402 und 404 nicht notwendigerweise linear mit einer angelegten Steuerspannung oder einem angelegten Steuerstrom ändert, führt dies dazu, daß sich die Kapazität ebensowenig mit der angelegten Steuerspannung oder dem angelegten Steuerstrom linear ändert. Da sowohl das Steuerungssignal (Spannung und/oder Strom) als auch das Hochfrequenz-Signal am selben Anschluß eines MEMS-Kondensators auftritt, wird ein solcher MEMS-Kondensator ein nicht-lineares Bauelement sein, insbesondere bei großen Hochfrequenz-Signalen. Die Kapazität kann sich, ebenso wie bei einer Varaktordiode, mit dem Hochfrequenz-Signal ändern, sogar dann, wenn das Steuerungssignal (Spannung und/oder Strom) fest ist. Im Stand der Technik sind keine Veröffentlichungen bekannt, die sich mit dem Linearitätsproblem bei solchen MEMS-Kondensatoren beschäftigen.

Obwohl sich viele Veröffentlichungen intensiv mit der Güte (Q-Faktor) und dem Abstimmbereich beschäftigen, ist hervorzuheben, daß bei den bekannten Kondensatoren entweder der berichtete Q-Faktor sehr gering ist (z. B. viel niedriger als 100 bei Frequenzen von etwa 1,5 GHz) oder aber der erreichte Abstimmbereich sehr beschränkt ist (z. B. lediglich von 0,5 pF bis 3,5 pF reicht).

Ausgehend von diesem Stand der Technik liegt der vorliegenden Erfindung die Aufgabe zugrunde, einen verbesserten durchstimmbaren Hochfrequenz-Kondensator zu schaffen, der ein lineares Bauelement mit hohem Gütefaktor und hohem Abstimmbereich ist.

Diese Aufgabe wird durch einen durchstimmbaren Hochfrequenz-Kondensator gemäß Anspruch 1 gelöst.

Die vorliegende Erfindung schafft einen durchstimmbaren Hochfrequenz-Kondensator mit einer ersten, nicht-beweglichen Elektrode mit Hochfrequenz-Eingangsanschluß, einer zweiten nicht-beweglichen Elektrode mit einem Hochfrequenz-Ausgangsanschluß; einer beweglichen Elektrode, die gegenüberliegend zu und beabstandet von der ersten und der zweiten nicht-beweglichen Elektrode angeordnet ist, und einer Aufhängung, die die bewegliche Elektrode trägt und abhängig von einem an die Aufhängung anlegbaren Steuerungssignal eine verschiebung der beweglichen Elektrode bezüglich der ersten und der zweiten nicht-beweglichen Elektrode bewirkt.

Der vorliegenden Erfindung liegt ein neuartiges Konzept für einen einstellbaren MEMS-Kondensator zugrunde, mittels dem die Nachteile von Varaktordioden ausgeräumt werden können, so daß neue einstellbare MEMS-Kondensatorbauelemente hergestellt werden können, die für die Entwicklung verschiedener programmierbarer, sowohl linearer als auch nicht-linearer Hochfrequenz-Schaltungen (LNA, Mischer, VCO, PA, Filter, etc.) z. B. in re-konfigurierbaren Funksystemen, einschließlich Mobilfunkgeräte etc., verwendet werden können.

Gemäß einem Ausführungsbeispiel der vorliegenden Erfindung umfaßt die Aufhängung einen Aktor bzw. ein Betätigungsglied, das abhängig von dem anliegenden Steuerungssignal die Verschiebung der beweglichen Elektrode bewirkt, wobei der Hochfrequenz-Signalweg von dem Hochfrequenz-Eingangsanschluß über die bewegliche Elektrode zu dem Hochfrequenz-Ausgangsanschluß von der Aufhängung isoliert ist.

Gemäß einer bevorzugten Ausführungsform umfaßt der Kondensator eine Rahmenstruktur, die die bewegliche Elektrode trägt und an der die Aufhängung befestigt ist. Ferner kann eine isolierende Membran vorgesehen sein, die an einer der nicht-beweglichen Elektrode zugewandten Oberfläche der beweglichen Elektrode angeordnet ist. Die isolierende Membran kann auch in der Rahmenstruktur getragen sein, wobei in diesem Fall die bewegliche Elektrode auf der isolierenden Membran angeordnet ist.

Die vorliegende Erfindung ermöglicht mittels der Aufhängung und der Ansteuerung mittels eines Steuerungssignals eine Bewegung der beweglichen Elektrode in einer Ebene parallel zu den nicht-beweglichen Elektroden und/oder in einer Ebene senkrecht zu den nicht-beweglichen Elektroden.

Gemäß einem bevorzugten Ausführungsbeispiel der vorliegenden Erfindung, umfaßt der Kondensator ein Substrat mit einer ersten Hauptoberfläche, auf der die erste und die zweite nicht-bewegliche Elektrode beabstandet zueinander angeordnet sind. Die Aufhängung ist in diesem Fall ebenfalls mit der ersten Hauptoberfläche verbunden. Gemäß einem Ausführungsbeispiel kann die Aufhängung durch einen oder mehrere Biegebalken gebildet sein. Vorzugsweise ist die Aufhängung durch eine mikromechanische Bearbeitung hergestellt.

Bevorzugte Ausführungsbeispiele der vorliegenden Erfindung werden nachfolgend unter Bezugnahme auf die beiliegenden Zeichnungen näher erläutert. Es zeigen:

Fig. 1A     eine Draufsichtdarstellung eines ersten Ausführungsbeispiels des erfindungsgemäßen durchstimmbaren Hochfrequenz-Kondensators;

Fig. 1B     eine Querschnittdarstellung des Kondensators aus Fig. 1A;

Fig. 2     ein Beispiel für eine Ausgestaltung der Aufhängung und der beweglichen Elektrode;

Fig. 3     ein weiteres Ausführungsbeispiel des erfindungsgemäßen durchstimmbaren Hochfrequenz-Kondensators;

Fig. 4A     ein Beispiel eines herkömmlichen MEMS-Kondensators; und

Fig. 4B     eine Querschnittdarstellung des Kondensators aus Fig. 4A.

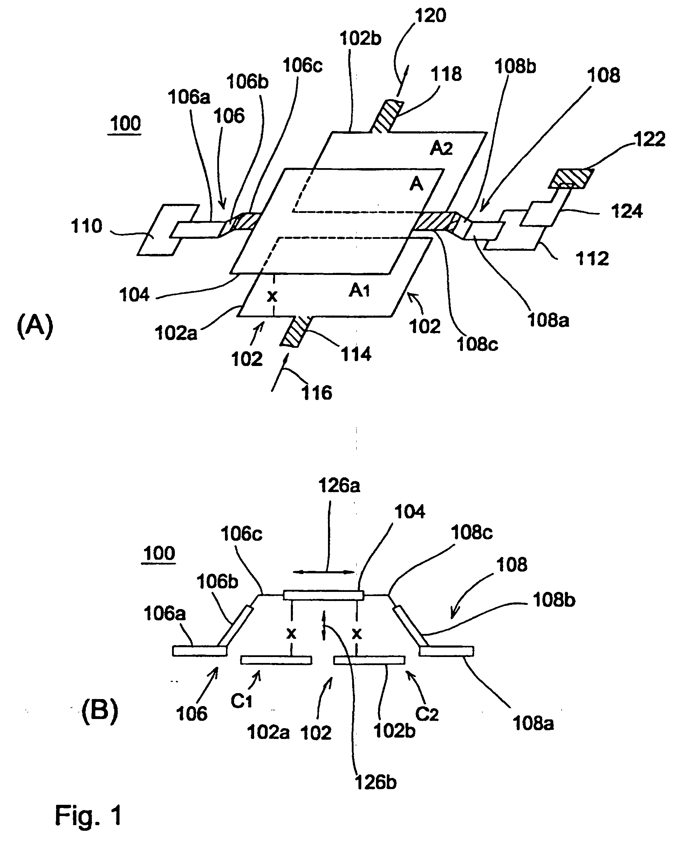

Anhand der Fig. 1 wird nachfolgend ein erstes bevorzugtes Ausführungsbeispiel näher beschrieben, wobei Fig. 1A eine schematische Draufsichtdarstellung des Ausführungsbeispiels zeigt, und Fig. 1B eine Querschnittdarstellung des in Fig. 1A gezeigten Kondensators ist. Hinsichtlich der weiteren Beschreibung wird darauf hingewiesen, daß für die Beschreibung der weiteren Ausführungsbeispiele in den nachfolgenden Figuren für ähnliche Elemente gleiche Bezugszeichen verwendet werden, und daß auf eine erneute Beschreibung dieser Elemente verzichtet wird.

In Fig. 1 ist ein MEMS-Kondensator 100 gezeigt, der eine nicht-bewegliche Elektrode 102 umfaßt, die einen ersten Abschnitt 102a und einen zweiten Abschnitt 102b aufweist. Der erste Elektrodenabschnitt 102a hat eine erste Fläche $A_1$, und der zweite Elektrodenabschnitt 102b hat eine zweite Fläche $A_2$. Die Flächen $A_1$ und $A_2$ können gleiche oder unterschiedliche Größen aufweisen.

Ferner ist eine bewegliche Elektrode 104 vorgesehen, die gegenüberliegend und um einen Abstand x von den ersten und zweiten Elektrodenplattenabschnitten 102a und 102b der nicht beweglichen Elektrode 102 angeordnet ist. Die bewegliche Elektrode 104 hat eine Fläche A. Die bewegliche Elektrode 104 ist derart angeordnet, daß diese die nicht-bewegliche Elektrode 102 vollständig überlappt, jedoch kann die Anordnung auch dergestalt sein, daß die nicht bewegliche Elektrode nur teilweise von der beweglichen Elektrode 104 überlappt wird, wobei in diesem Zusammenhang die Flächen $A_1$ und $A_2$ den Flächenbereich der nicht-beweglichen Elektrodenabschnitte 102a und 102b angeben, der der beweglichen Elektrode gegenüberliegt.

Die bewegliche Elektrode 104 ist durch eine erste Aufhängung 106 und eine zweite Aufhängung 108 getragen, so daß sich der Abstand x zu der nicht-beweglichen Elektrode einstellt. Die erste Aufhängung 106 umfaßt einen ersten Abschnitt 106a, einen zweiten Abschnitt 106b sowie einen dritten Abschnitt 106c. Der erste Abschnitt 106a der ersten Aufhängung 106 ist mit einem Befestigungsabschnitt 110 verbunden, der seinerseits mit einer weiteren Tragestruktur, auf der auch die nicht-bewegliche Elektrode angeordnet sein kann, verbunden sein kann, wie später noch näher beschrieben werden wird. Der dritte Abschnitt 106c der ersten Aufhängung 106 ist mit der beweglichen Elektrode 104 verbunden, und zwischen dem ersten Abschnitt 106a und dem dritten Abschnitt 106c ist der zweite Abschnitt 106b angeordnet, der ein Betätigungsglied/einen Aktor umfaßt. Bei dem in Fig. 1A gezeigten Ausführungsbeispiel sind die Abschnitte 106a und 106c der Aufhängung 106 im wesentlichen parallel zu der Ebene angeordnet, in der die Elektroden 102 bzw. 104 angeordnet sind. Der Abschnitt 106b ist gegenüber dieser Ebene unter einem Winkel angeordnet, so daß die bewegliche Elektrode 104 von der nicht-beweglichen Elektrode 102 beabstandet angeordnet ist.

Auf ähnliche Weise umfaßt die zweite Aufhängung 108 einen ersten Abschnitt 108a, einen zweiten Abschnitt 108b und einen dritten Abschnitt 108c. Der erste Abschnitt 108a ist an einer zweiten Befestigung 112 angeordnet, die ebenso wie die erste Befestigung 110 auf einer weiteren Tragestruktur angeordnet ist, die in Fig. 1A nicht gezeigt ist. Der dritte Abschnitt 108c ist mit der beweglichen Elektrode 104 verbunden, und zwischen dem ersten Abschnitt 108a und dem dritten Abschnitt 108c ist der zweite Abschnitt 108b angeordnet, der, wie der Abschnitt 106b der ersten Aufhängung 106 ein Betätigungsglied/einen Aktor umfaßt. Wie die Abschnitte 106a und 106c sind auch die Abschnitte 108a und 108c parallel zu einer Ebene in der die Elektroden 102 bzw. 104 angeordnet sind, angeordnet und der Abschnitt 1086 ist unter einem Winkel bezüglich dieser Ebene angeordnet, um so die beabstandete Anordnung der beweglichen Elektrode herbeizuführen.

Der erste Abschnitt 102a der unteren Elektrode 102 umfaßt einen Hochfrequenz-Eingang 114, an den ein Hochfrequenz-Signal angelegt wird, wie dies durch den Pfeil 116 verdeutlicht ist. Der zweite Abschnitt 102b der nicht-beweglichen Elektrode 102 umfaßt einen Hochfrequenz-Ausgang 118, an dem das Hochfrequenz-Signal ausgegeben wird, wie durch den Pfeil 120 verdeutlicht ist. Der Hochfrequenz-Signalweg durch den Kondensator 100 beginnt somit am Eingang 114, von dem das Hochfrequenz-Signal über den ersten Abschnitt 102a der nicht-beweglichen Elektrode 102 zu der beweglichen Elektrode 104 läuft, und von dort zu dem zweiten Abschnitt 102b der nicht-beweglichen Elektrode und weiter zum Ausgang 118. Um diesen Hochfrequenz-Signalweg durch den Kondensator 100 sicherzustellen, sind die Abschnitte 106c und 108c der Aufhängungen 106 bzw. 108 für den Hochfrequenz-Signalweg isolierend ausgestaltet, wie weiter unten noch näher beschrieben wird.

Der Kondensator 100 umfaßt ferner einen Steuerungsanschluß 122 zum Empfangen eines Steuerungssignals, der über eine Leitung 124 mit der Befestigung 112 und weiter mit den Aufhängungen 108 und 106 verbunden ist. An den Steuerungsanschluß 122 wird ein geeignetes Steuerungssignal angelegt, um die in den Abschnitten 106b und 108b angeordneten Aktoren zu betätigen, um so eine Verschiebung der beweglichen Elektrode 104 bezüglich der nicht-beweglichen Elektroden 102a, 102b zu bewirken.

Der Kondensator 100 hat eine Gesamtkapazität C, die durch eine Serienschaltung von zwei Kondensatoren bestimmt ist. Die beiden Kondensatoren sind einmal gebildet durch den ersten Abschnitt 102a der unteren Elektrode 102 und die gegenüberliegenden Abschnitte der beweglichen Elektrode 104 sowie durch den zweiten Abschnitt 102b der unteren Elektrode 102 und dem entsprechend gegenüberliegenden Abschnitt der oberen Elektrode. Die Gesamtkapazität ergibt sich somit zu

$$C = \frac{C_1 \cdot C_2}{C_1 + C_2}$$

mit:

$C_1$ = Kapazitätswert des ersten Kondensators,
$C_2$ = Kapazitätswert des zweiten Kondensators,

wobei sich die jeweiligen Kapazitätswerte wie folgend berechnen:

$$C_1 = \varepsilon_0 \cdot \varepsilon_r \cdot \frac{A_1}{x},$$

$$C_2 = \varepsilon_0 \cdot \varepsilon_r \cdot \frac{A_2}{x}.$$

mit

$\varepsilon_0 =$     elektrische Feldkonstante

$\varepsilon_r =$     Dielektrizitätszahl für das zwischen den Elektroden 102 und 104 angeordnete Dielektrikum

$A_1, A_2 =$     wirksame Kondensatorfläche

$x =$     Abstand zwischen den Elektroden 102, 104

In Fig. 1B ist eine Querschnittdarstellung des in Fig. 1A gezeigten Kondensators dargestellt, wobei die gleichen Bezugszeichen verwendet werden. Zur Verdeutlichung sind nochmals die beiden Kondensatoren $C_1$ und $C_2$ angezeigt. Ferner sind durch die Pfeile 126a und 126b die Bewegungsrichtungen angezeigt, in der sich die bewegliche Elektrode 104 bewegen kann, wenn ein entsprechendes Steuerungssignal an den in Fig. 1A gezeigten Steuerungsanschluß 122 zum Betätigen der Aktoren 106b, 108b angelegt wird.

Wie in Fig. 1 zu erkennen ist, umfaßt der erfindungsgemäße Kondensator drei Metallplatten 102a, 102b, 104 anstelle der im Stand der Technik verwendeten zwei Metallplatten (wie in Fig. 4). Die unteren zwei Platten 102a und 102b sind getrennt mit einem Hochfrequenz-Eingang 114 und einem Hochfrequenz-Ausgang 118 verbunden. Die obere Elektrode 104 wird durch die zwei Aufhängungen 106 und 108 getragen, wobei die Aufhängungen sowohl nach oben als auch nach unten (siehe Pfeil 126b in Fig. 1B) als auch seitlich (siehe Pfeil 126a in Fig. 1B) durch die Aktoren/Betätigungsglieder 106b, 108b bewegt werden, die wiederum abhängig von deren Ausgestaltung durch eine am Anschluß 122 anliegende Steuerspannung oder einen anliegenden Steuerstrom gesteuert sind. Ein weiteres Merkmal der vorliegenden Erfindung besteht darin, daß die Aufhängung 106, 108 von der oberen Elektrode 104 elektrisch isoliert ist.

wie oben schon angeführt wurde, ist die Kapazität des Kondensators 100 äquivalent zwei seriell verschalteten Kondensatoren. Der Vorteil der vorliegenden Erfindung besteht darin, daß mit dem erfindungsgemäßen Aufbau die Hochfrequenz-Signale und die Steuerungssignale (Spannungen oder Ströme) unterschiedliche Anschlüsse verwenden. Die verschiedenen Signalwege, also der Hochfrequenz-Signalweg und der Steuerungssignalweg, sind voneinander isoliert, so daß sich der Kapazitätswert des Kondensators 100 nicht ändern wird, also konstant bleibt, wenn die Steuerungssignale auf einem festen Wert sind, auch wenn sich die Hochfrequenz-Signale ändern. Somit wird ein lineares Bauelement erreicht.

Der erfindungsgemäße Kondensator hat hinsichtlich des erreichbaren Gütewertes ebenfalls einen erheblichen Vorteil. Da die Aufhängungen und die Aktoren, die allgemein hohe Verluste mit sich bringen, nicht als Teil des Hochfrequenz-Signalweges verwendet werden, und da die Metallplatten 102/104 sehr geringe Verluste haben, kann der Q-Faktor (die Güte) eines solchen Kondensators auf einem sehr hohen Wert gehalten werden, z. B. größer als 100 bei 1,5 GHz.

Ein weiterer Vorteil besteht darin, daß zusätzlich ein großer Abstimmbereich realisiert werden kann, da die Aufhängungen bewirken, daß der Abstand x zwischen der oberen Platte 104 und den unteren Platten 102a, 102b über einen großen Bereich verändert werden kann. Eine weitere Verbesserung des Abstimmbereichs des Kondensators kann damit erreicht werden, daß die Aktoren eine seitliche Verschiebung der Aufhängung bewirken, so daß sich als weiterer Freiheitsgrad bei der Einstellung des Kapazitätswertes, zusätzlich zum Abstand x, die wirksame Kondensatorplattenfläche ergibt, wobei die wirksame Kondensatorplattenfläche diejenige Fläche einer unteren Elektrode 102a oder 102b ist, die von der oberen Elektrode überdeckt wird. Durch eine entsprechende Verschiebung der oberen Elektrode 104 können diese Flächen $A_1$ und $A_2$ ebenfalls verändert werden.

Der Vorteil der erfindungsgemäßen Vorrichtung besteht darin, daß diese insbesondere für Anwendungen in einer Vielzahl von programmierbaren linearen oder nicht-linearen Hochfrequenz-Schaltungen oder Mikrowellenschaltungen geeignet ist.

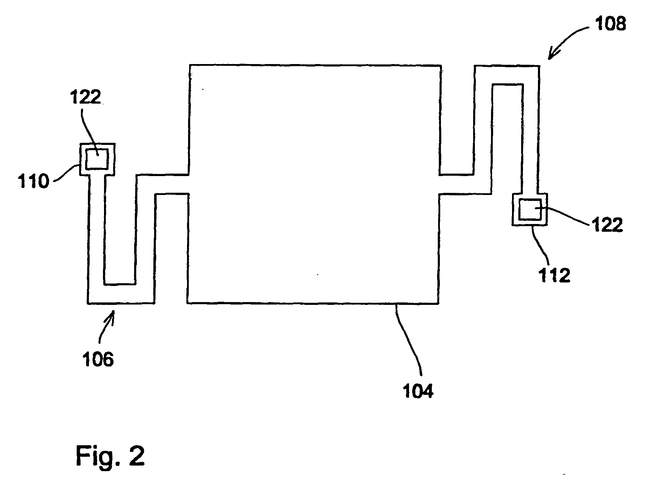

In Fig. 2 ist ein Beispiel für die Aufhängung der oberen Elektrode 104 dargestellt. Wie zu erkennen ist, sind die Aufhängungen 106 und 108 jeweils durch einen Biegebalken realisiert, der an einem Ende mit der Elektrode 104 verbunden ist, und an dem anderen Ende mit der Befestigung 110 bzw. 112. In Abweichung von dem in Fig. 1 gezeigten Ausführungsbeispiel ist in Fig. 2 jede Befestigung 110 und 112 mit einem Steuerungsanschluß 122 versehen, um ein Steuerungssignal, z. B. in Form eines Spannungssignals, zu erhalten, welches eine entsprechende Verformung des Biegebalkens 106, 108 und damit eine entsprechende Verschiebung der Elektrode 104 bewirkt. Die Biegebalken 106 und 108 sind aus einem elektrisch isolierenden Material hergestellt, um so die Entkopplung zwischen dem Hochfrequenz-Signal durch den Kondensator und dem Steuerungssignalweg sicherzustellen.

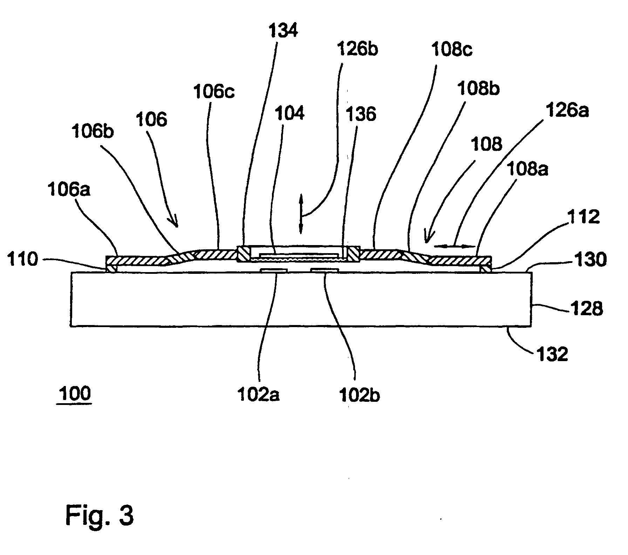

In Fig. 3 ist ein weiteres Ausführungsbeispiel des erfindungsgemäßen Kondensators gezeigt, und insbesondere eine alternative Realisierung der Aufhängung der beweglichen Elektrode isoliert von den Aufhängungen.

Der Kondensator 100 umfaßt ein Substrat 128 mit einer ersten Hauptoberfläche 130 und einer zweiten Hauptoberfläche 132, die der ersten Hauptoberfläche 130 gegenüberliegt. Auf der ersten Hauptoberfläche 130 sind die unteren Elektroden 102a und 102b angeordnet. Die Aufhängungen 106 und 108 sind über die Befestigungen 110 und 112 ebenfalls mit der ersten Hauptoberfläche 130 verbunden.

Der Kondensator 100 umfaßt ferner eine Rahmenstruktur 134. Die Abschnitte 106c und 108c sind mit dem Rahmen 134 verbunden. In dem Rahmen aufgespannt ist eine isolierende Membran 136 angeordnet, auf der die bewegliche Elektrode 104 ruht. Die Membran 136 ist somit zwischen der beweglichen und der nicht-beweglichen Elektrode angeordnet. Durch die in Fig. 3 gezeigte Anordnung wird auf alternative Art und Weise die Entkopplung von Hochfrequenz-Signalweg und Steuerungs-Signalweg sichergestellt.

Um eine kapazitive Kopplung des Signals zwischen der oberen Metallplatte 104 und der Aktorstruktur, die aus Metall oder Silizium bestehen kann, zu verhindern, muß der Abstand, der durch die Abschnitte 106c und 108c der Aufhängungen eingestellt ist, so groß wie möglich sein. Dies ist insbesondere dann wichtig, wenn keine isolierende Membran 136 verwendet wird.

Anstelle der Verwendung der dicken Isolationsschicht kann auch die in Fig. 3 gezeigte isolierende Membran 136, die in dem Rahmen 134 der Aktorstruktur angeordnet ist, verwendet werden. Wie zu erkennen ist, ist bei diesem Ansatz die obere Platte 104 des Kondensators auf der isolierenden Membran 136 angeordnet.

**Patentansprüche**

1. Durchstimmbarer Hochfrequenz-Kondensator, mit einer ersten nicht-beweglichen Elektrode (102a) mit einem Hochfrequenz-Eingangsanschluß (114); einer zweiten nicht-beweglichen Elektrode (102b) mit einem Hochfrequenz-Ausgangsanschluß (118); einer beweglichen Elektrode (104), die gegenüberliegend zu und beabstandet von der ersten und der zweiten nicht-beweglichen Elektrode (102a, 102b) angeordnet ist, und einer Aufhängung (106, 108), die die bewegliche Elektrode (104) trägt und abhängig von einem an die Aufhängung anlegbaren Steuerungssignal eine Verschiebung der beweglichen Elektrode (104) bezüglich der ersten und der zweiten nicht-beweglichen Elektrode bewirkt (102a, 102b), wobei die Aufhängung (106, 108) und die bewegliche Elektrode (104) elektrisch voneinander isoliert sind.

2. Durchstimmbarer Hochfrequenz-Kondensator nach Anspruch 1, bei dem die Aufhängung (106, 108) ein Betätigungsglied (106b, 108b) umfaßt, das abhängig von dem anliegenden Steuerungssignal die Verschiebung der beweglichen Elektrode (104) bewirkt, wobei der Hochfrequenz-Signalweg von dem Hochfrequenz-Eingangsanschluß (114) über die bewegliche Elektrode (104) zu dem Hochfrequenz-Ausgangsanschluß (118) von der Aufhängung (106, 108) isoliert ist.

3. Durchstimmbarer Hochfrequenz-Kondensator nach Anspruch 1 oder 2, mit einer Rahmenstruktur (134), die die bewegliche Elektrode (104) trägt, wobei die Aufhängung (106, 108) mit der Rahmenstruktur verbunden ist.

4. Durchstimmbarer Hochfrequenz-Kondensator nach einem der Ansprüche 1 bis 3, mit einer isolierenden Membran (136), die an der den nicht-beweglichen Elektroden (102a, 102b) zugewandten Oberfläche der beweglichen Elektrode (104) angeordnet ist.

5. Durchstimmbarer Hochfrequenz-Kondensator nach Anspruch 4, bei dem die isolierende Membran (136) in der Rahmenstruktur (134) getragen ist, wobei die bewegliche Elektrode (104) auf der isolierenden Membran (136) angeordnet ist.

6. Durchstimmbarer Hochfrequenz-Kondensator nach einem der Ansprüche 1 bis 5, bei dem die Aufhängung (106, 108) eine Bewegung der beweglichen Elektrode (104) in einer Ebene parallel zu den nicht-beweglichen Elektroden (102a, 102b) und/oder in einer Ebene senkrecht zu den nicht-beweglichen Elektroden (102a, 102b) bewirkt.

7. Durchstimmbarer Hochfrequenz-Kondensator nach einem der Ansprüche 1 bis 6, mit einem Substrat (128) mit einer ersten Hauptoberfläche (130), auf der die erste und die zweite nicht-bewegliche Elektrode (102a, 102b) beabstandet zueinander angeordnet sind, wobei die Aufhängung (106, 108) mit der ersten Hauptoberfläche (130) verbunden ist.

8. Durchstimmbarer Hochfrequenz-Kondensator nach einem der Ansprüche 1 bis 7, bei dem die Aufhängung (106, 108) durch einen oder mehrere Biegebalken gebildet ist.

9. Durchstimmbarer Hochfrequenz-Kondensator nach einem der Ansprüche 1 bis 8, bei dem die Aufhängung (106, 108) durch eine mikromechanische Bearbeitung hergestellt ist.

**Claims**

1. Tuneable high-frequency capacitor comprising a first fixed electrode (102a) having a high-frequency input connection (114); a second fixed electrode (102b) having a high-frequency output connection (118); a movable electrode (104) mounted facing and spaced apart from the first and second fixed electrodes (102a, 102b); and

a suspension (106, 108) which supports the movable electrode (104) and causes a displacement of the movable electrode (104) in relation to the first and second fixed electrodes (102a, 102b) depending on a control signal applicable to the suspension, the suspension (106, 108) and the movable electrode (104) being electrically insulated from each other.

2. Tuneable high-frequency capacitor as claimed in claim 1, wherein the suspension (106, 108) includes an actuator (106b, 108b) which causes the displacement of the movable electrode (104) depending on the control signal applied, the high-frequency signal path from the high-frequency input connection (114) via the movable electrode (104) to the high-frequency output connection (118) being insulated from the suspension (106, 108).

3. Tuneable high-frequency capacitor as claimed in claim 1 or 2, comprising a frame structure (134) supporting the movable electrode (104), the suspension (106, 108) being connected to the frame structure.

4. Tuneable high-frequency capacitor as claimed in any of claims 1 to 3, comprising an insulating membrane (136) which is arranged on the surface of the movable electrode (104) which faces the fixed electrodes (102a, 102b).

5. Tuneable high-frequency capacitor as claimed in claim 4, wherein the insulating membrane (136) is supported within the frame structure (134), the movable electrode (104) being arranged on the insulating membrane (136).

6. Tuneable high-frequency capacitor as claimed in any of claims 1 to 5, wherein the suspension (106, 108) causes a movement of the movable electrode (104) in a plane parallel to the fixed electrodes (102a, 102b) and/or in a plane perpendicular to the fixed electrodes (102a, 102b).

7. Tuneable high-frequency capacitor as claimed in any of claims 1 to 6, comprising a substrate (128) having a first main surface (130) on which the first and the second fixed electrodes (102a, 102b) are arranged so as to be spaced apart from each other, the suspension (106, 108) being connected to the first main surface (130).

8. Tuneable high-frequency capacitor as claimed in any of claims 1 to 7, wherein the suspension (106, 108) is formed by one or several bending beams.

9. Tuneable high-frequency capacitor as claimed in any of claims 1 to 8, wherein the suspension (106, 108) is produced by micromechanical processing.

**Revendications**

1. Condensateur à haute fréquence variable, avec
une première électrode non mobile (102a) avec une connexion d'entrée haute fréquence (114) ;
une deuxième électrode non mobile (102b) avec une connexion d'entrée haute fréquence (118) ;
une électrode mobile (104) qui est disposée vis-à-vis et à une distance de la première et de la deuxième électrode non mobile (102a, 102b) ; et
une suspension (106, 108) qui porte l'électrode mobile (104) et entraîne, en fonction d'un signal de commande pouvant être appliqué sur la suspension, un déplacement de l'électrode mobile (104) par rapport à la première et à la deuxième électrode non mobile (102a, 102b), la suspension (106, 108) et l'électrode mobile (104) étant isolées électriquement l'une de l'autre.

2. Condensateur à haute fréquence variable selon la revendication 1, dans lequel la suspension (106, 108) comporte un élément d'actionnement (106b, 108b) qui entraîne, en fonction du signal de commande présent, le déplacement de l'électrode mobile (104), le trajet du signal haute fréquence de la connexion d'entrée haute fréquence (114), via l'électrode mobile (104), à la connexion de sortie haute fréquence (118) étant isolé de la suspension (106, 108).

3. Condensateur à haute fréquence variable selon la revendication 1 ou 2, avec une structure de cadre (134) portant l'électrode mobile (104), la suspension (106, 108) étant reliée à la structure de cadre.

4. Condensateur à haute fréquence variable selon l'une des revendications 1 à 3, avec une membrane isolante (136) qui est disposée sur la surface de l'électrode mobile (104) tournée vers les électrodes non mobiles (102a, 102b).

5. Condensateur à haute fréquence variable selon la revendication 4, dans lequel la membrane isolante (136) est portée dans la structure de cadre (134), l'électrode mobile (104) étant disposée sur la membrane isolante (136).

6. Condensateur à haute fréquence variable selon l'une des revendications 1 à 5, dans lequel la suspension (106, 108) entraîne un mouvement de l'électrode mobile (104) dans un plan parallèle aux électrodes non mobiles (102a, 102b) et/ou dans un plan perpendiculaire aux électrodes non mobiles (102a, 102b).

7. Condensateur à haute fréquence variable selon l'une des revendications 1 à 6, avec un substrat (128) avec une première surface principale (130) sur laquelle sont disposées, distantes l'une de l'autre, la première et la deuxième électrode non mobile (102a, 102b), la suspension (106, 108) étant reliée à la première surface principale (130).

8. Condensateur à haute fréquence variable selon l'une des revendications 1 à 7, dans lequel la suspension (106, 108) est constituée d'une ou de plusieurs poutres fléchissantes.

9. Condensateur à haute fréquence variable selon l'une des revendications 1 à 8, dans lequel la suspension (106, 108) est réalisée par un usinage micromécanique.

Fig. 1

Fig. 2

Fig. 3

(A)

400

(B)

Fig. 4    Stand der Technik